# FASCICULE DE BREVET EUROPEEN

(11) **EP 1 264 387 B1**
(45) Date de publication et mention de la délivrance du brevet: **24.09.2003**
(21) Numéro de dépôt: 01914082.1
(22) Date de dépôt: 14.03.2001
(51) Int. Cl.: H02K 5/14, H02K 5/24, H02K 13/10, H01R 39/46

(54) **PORTE-BALAIS AVEC DES BALAIS LAMELLES, D'UN RESSORT ET D'UN AMORTISSEUR**
BÜRSTENHALTER MIT LAMELLIERTEN BÜRSTEN, FEDER UND DÄMPFER
BRUSH HOLDER COMPRISING BRUSHES WITH CONTACT TABS, SPRING AND DAMPING ELEMENT

(30) Priorité: 14.03.2000 CH 4852000
(43) Date de publication de la demande: 11.12.2002
(73) Titulaire: Api Portescap, 2301 La Chaux-De-Fonds (CH)
(72) Inventeur: VAUCHER, Bernard, CH-2300 La Chaux-De-Fonds (CH)
(74) Mandataire: Reuteler, Raymond Werner
(86) Numéro de dépôt international: IB0100363
(87) Numéro de publication internationale: WO01069760

(56) Documents cités:
- DE-A- 19 856 045
- GB-A- 1 111 527
- PATENT ABSTRACTS OF JAPAN vol. 1995, no. 10, 30 novembre 1995 (1995-11-30) & JP 07 194067 A (MABUCHI MOTOR CO LTD), 28 juillet 1995 (1995-07-28)
- PATENT ABSTRACTS OF JAPAN vol. 010, no. 217 (E-423), 29 juillet 1986 (1986-07-29) -& JP 61 054845 A (MATSUSHITA ELECTRIC IND CO LTD), 19 mars 1986 (1986-03-19)
- PATENT ABSTRACTS OF JAPAN vol. 1997, no. 08, 29 août 1997 (1997-08-29) -& JP 09 093877 A (ASMO CO LTD), 4 avril 1997 (1997-04-04)

## Description

La présente invention concerne un dispositif collecteur pour moteurs électriques, notamment des moteurs comportant un rotor comprenant une ou plusieurs bobines alimentées en courant électrique par un dispositif collecteur.

Dans ce type de moteur, les fils conducteurs des bobines sont connectés à des lamelles de collecteur correspondantes disposées autour d'une partie d'un axe du moteur contre lesquelles s'appuient des balais de commutation qui sont connectés à des conducteurs d'un circuit d'alimentation. L'appui d'une surface de contact du balai contre les lamelles de collecteur est assuré par un ressort, par exemple un bras élastique encastré à une partie d'extrémité et portant la surface de contact proche de l'autre extrémité. Il est connu de lubrifier les surfaces de contact entre les balais et le collecteur sur l'axe du moteur pour réduire l'usure et augmenter la durée de vie du moteur. Les moteurs conventionnels souffrent néanmoins d'usure par électro-érosion provenant des étincelles entre les balais et les lamelles de collecteur, dû notamment aux écartements des surfaces de contact résultant des vibrations des balais.

Au vu de ces inconvénients, un but de l'invention est de réduire l'usure des parties de collecteur de moteurs électriques et d'augmenter la performance et la fiabilité de ces moteurs. Il est en outre avantageux de fournir un dispositif collecteur pour moteurs compact et peu coûteux.

Des buts de l'invention sont réalisés par un dispositif de commutation pour moteur selon la revendication 1.

Dans la présente invention, un dispositif collecteur pour un moteur électrique comporte une partie de boîtier et des balais de commutation logés dans ladite partie de boîtier, chaque balai comportant une partie de contact ayant une surface de contact destinée à être en appui contre une partie de collecteur d'un rotor du moteur électrique, et une partie de ressort connectée à la partie de contact de façon à exercer une force sur cette partie de contact en direction de la partie de collecteur du rotor.

Le document JP-A- 07194067 décrit un dispositif Collecteur pour moteur électrique du type décrit ci-dessus.

Selon l'invention le dispositif collecteur est caractérisé en ce qu'il comporte un amortisseur disposé de façon à amortir les vibrations ou déplacements de la partie de contact du balai, l'amortisseur comportant une réserve de lubrifiant. L'amortissement des balais permet ainsi d'augmenter la durée de vie du moteur en réduisant les étincelles dues aux séparations des surfaces de contact des balais et de la partie de collecteur du rotor. Le lubrifiant sert aussi à lubrifier les surfaces de contact des balais.

La partie de ressort du balais peut avantageusement être sous la forme d'un bras élastique s'étendant entre une partie de fixation du balai fixée à la partie de boîtier, et la partie de contact qui est disposée à proximité d'une extrémité libre du balai. L'amortisseur peut être disposé le long du bras élastique en entourant une partie de celui-ci. La réserve de lubrifiant peut être disposée dans une partie de réservoir de la partie de boîtier, par exemple sous forme d'une alvéole disposée autour d'une portion de la partie de ressort des balais. Le lubrifiant peut être un lubrifiant thyxotrope pour pouvoir maintenir sa forme et position dans le réservoir tout en permettant à une petite quantité de lubrifiant de migrer le long des balais, par exemple par effet capillaire (tension de surface), jusqu'aux surfaces de contact.

Avantageusement, l'utilisation d'un lubrifiant en tant qu'amortisseur et en tant que lubrifiant permet de simplifier la construction du dispositif de collecteur pour moteur et de réaliser un dispositif à faible coût, mais néanmoins très performant et compact.

D'autres aspects, avantages. et buts de l'invention ressortiront de la description détaillée suivante et des dessins annexés, dans lesquels
la Fig. 1 est une vue d'un dispositif de commutation pour moteur selon l'invention; et
la Fig. 2 est une coupe selon la ligne II-II de la Fig. 1.

Dans l'exemple illustré, un dispositif collecteur 1 pour moteur électrique comporte une partie de boîtier 2, des balais 3 logés dans des cavités 4 de la partie de boîtier, et des parties de connexion électriques 5 pour la connexion électrique des balais à des conducteurs d'alimentation électriques. La partie de boîtier peut être une partie de boîtier d'un moteur électrique, par exemple un couvercle du moteur, comprenant un passage 6 pour un axe d'un rotor bobiné du moteur. L'axe du rotor peut être entouré de lamelles de collecteur connectées aux fils conducteurs des bobines. Chaque balai 3 comporte une partie de contact 7 comprenant une surface de contact 8 qui s'appuie contre la partie de collecteur du rotor, une partie de ressort 9 et une partie de fixation 10.

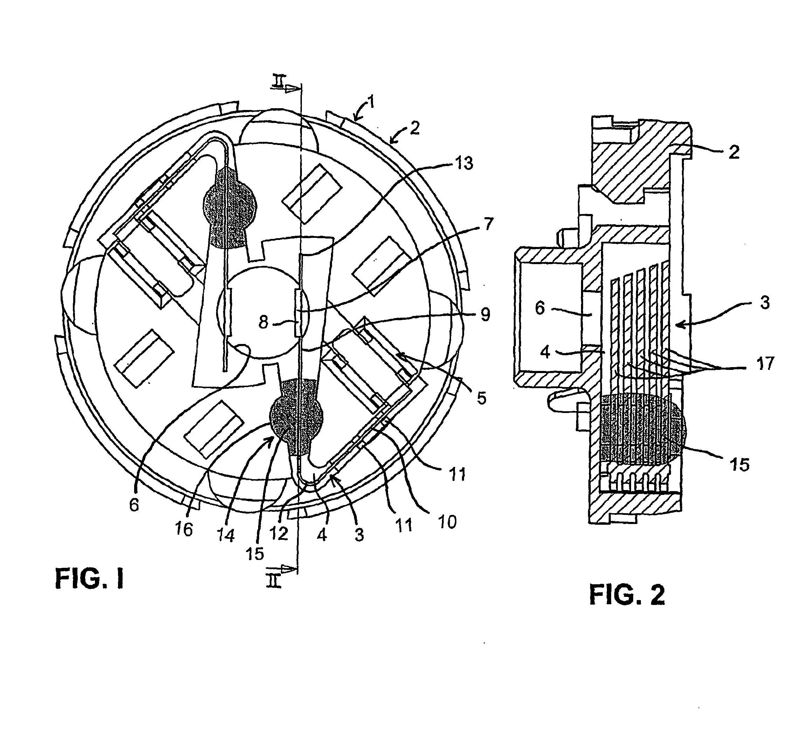

La partie de fixation 10 du balai est fixée dans le couvercle par son insertion dans des fentes de pincés 11 formées par exemple par moulage et faisant partie intégrante avec la partie de boîtier. La partie de fixation 10 des balais est connectée électriquement, par exemple par soudage ou en étant solidaire avec la partie de connexion 5 qui peut être sous forme d'une borne à déplacement d'isolant connue ou sous forme d'autres bornes connues pour la connexion à des fils conducteurs d'alimentation ou des connecteurs externes. Dans l'exemple illustré, la partie de fixation 10 est connectée à la partie de ressort 9 par une partie de coude 12, de sorte que le balai a généralement une forme de V. La partie de ressort 9 est sous forme d'un bras élastique s'étendant de la partie de coude 12 à la partie de contact 10 qui est proche d'une extrémité libre 13 du balai. Dans sa position neutre, comme montré dans la Fig. 1, la partie de contact 7 du balai 3 coupe à travers le passage 6 de l'axe du rotor, de sorte que lorsque le dispositif collecteur 1 est monté sur un moteur électrique, le bras élastique 9 de chaque balai est fléchi en direction de la partie de connexion 5 correspondante.

Dans les moteurs conventionnels, quand le moteur est en marche, la rotation du rotor ainsi que des dispositifs auxquels le moteur est connecté, peut causer des vibrations des balais, de sorte que leurs surfaces de contact 8 se séparent des surfaces de contact correspondantes des lamelles de collecteur du rotor créant ainsi des étincelles. Ces étincelles provoquent une usure par électro-érosion des surfaces de contact qui réduit la durée de vie du moteur.

Pour réduire ou éliminer l'usure des surfaces de contact du collecteur, le dispositif de collecteur 1 est muni d'un amortisseur 14 agissant sur le balai, et notamment agissant sur la partie de ressort 9 du balai. L'amortisseur 14 comporte une réserve de lubrifiant 15 disposée dans une partie de réservoir 16 formée dans la partie de boîtier 2, par exemple sous forme d'une avéole disposée entre la partie de coude 12 et la partie de contact 7 du balai. La partie de ressort 9 est entourée sur une portion de sa longueur par la réserve de lubrifiant 15, de sorte que ses déplacements sont amortis par le lubrifiant, en raison des caractéristiques visceuses du lubrifiant.

Le lubrifiant 15 est de préférence un lubrifiant thyxotrope, de sorte qu'il maintient sa forme tout en permettant à une couche mince de lubrifiant de progresser le long du balai jusqu'à la surface de contact 8, par exemple par effet capillaire (ou réduction de l'énergie de surface), pour lubrifier cette surface. L'utilisation d'un lubrifiant thyxotrope pour l'amortissement des balais et leur lubrification est très avantageuse en raison de la simplicité et compacité de la construction tout en augmentant la fiabilité de lubrification des surfaces de contact et en réduisant l'usure.

Le lubrifiant peut aussi être sous forme d'un gel ou être contenu dans un matériau mou et poreux, tel que du feutre ou de la mousse.

La partie de contact 7 des balais peut être disposée sur une multitude de lamelles 17 élastiques juxtaposés, tel que montré dans la Fig. 2, de façon à optimiser le contact entre les balais et les lamelles de collecteur. Chacune de ces lamelles élastiques se trouve entourée sur une portion de sa longueur par le lubrifiant 15. Par rapport à une lame seule, la multitude de lamelles juxtaposées diminue la probabilité de rupture de contact En outre, les lamelles ont des longueurs différentes afin de décaler les fréquences de résonance des lamelles les une par rapport aux autres.

La juxtaposition d'une multitude de lamelles formant le bras élastique et les parties de contact améliorent donc le contact avec le collecteur du rotor.

Avantageusement, un dispositif collecteur pour moteur selon l'invention réduit l'usure des surfaces de contact du collecteur tout en rendant la construction simple, compacte et peu coûteuse.

## Revendications

1. Dispositif collecteur (1) pour moteur électrique, comportant une partie de boîtier (2) et des balais (3) de commutation logés dans ladite partie de boîtier, chaque balai comportant une partie de contact(7)ayant une surface de contact (8) destinée à être en appui contre une partie de collecteur d'un rotor du moteur électrique, et une partie de ressort (9) connectée à la partie de contact (7) de façon à exercer une force sur cette partie de contact en direction de la partie de -collecteur du-rotor, **caractérise en ce que** le dispositif-comporte un amortisseur (14) disposé de façon à amortir les vibrations ou déplacements de la partie de contact (7) du balai, l'amortisseur comportant une réserve de lubrifiant (15).

2. Dispositif selon la revendication 1, **caractérisé en ce que** le lubrifiant est thyxotrope.

3. Dispositif selon la revendication 1 ou 2, **caractérisé en ce que** le lubrifiant est contenu dans un matériau mou et poreux.

4. Dispositif selon la revendication 1, 2 ou 3, **caractérisé en ce que** la réserve de lubrifiant (15) est disposée dans une partie de réservoir (16) formé dans la partie de boîtier autour d'une portion de la partie de ressort (9) du balai.

5. Dispositif selon l'une des revendications précédentes, **caractérisé en ce que** la partie de ressort (9) du balai est sous forme d'un bras élastique s'étendant entre une partie de fixation (10) et la partie de contact (7) disposée à proximité d'une extrémité libre (13) du balai.

6. Dispositif selon la revendication précédente, **caractérisé en ce que** la partie de ressort (9) comporte une multitude de lamelles (17) juxtaposées.

7. Dispositif selon la revendication précédente, **caractérisé en ce que** les lamelles ont des longueurs différentes.

8. Dispositif selon l'une des revendications précédentes, **caractérisé en ce que** le balai (3) a généralement la forme d'un V, une extrémité étant libre (13) et l'autre extrémité étant connectée à une partie de connexion électrique (5) destinée à être connectée à des conducteurs d'alimentation.

9. Dispositif selon l'une des revendication précédentes, **caractérisé en ce que** la partie de boîtier (2) est un couvercle d'un moteur électrique et comporte un passage (6) pour un axe d'un rotor du moteur, la partie de contact (7) de chaque balai traversant le passage (6).

## Patentansprüche

1. Kollektorvorrichtung (1) für einen Elektromotor mit einem Gehäuseteil (2) und Kommutatorbürsten (3), die in diesem Gehäuseteil untergebracht sind, wobei jede Bürste einen Kontaktabschnitt (7), der eine Kontaktfläche (8) hat, die dafür bestimmt ist, gegen einen Abschnitt des Kollektors eines Rotors des Elektromotors angedrückt zu werden, sowie einen Federabschnitt (9) trägt, der mit dem Kontaktabschnitt so verbunden ist, dass eine Kraft in Richtung auf den Kollektorabschnitt des Rotors auf diesen Kontaktabschnitt ausgeübt wird, **dadurch gekennzeichnet, dass** die Vorrichtung eine Federung (14) umfasst, die so angeordnet ist, dass sie die Vibrationen oder Bewegungen des Kontaktabschnitts (7) der Bürste dämpft, wobei die Federung einen Vorrat an Schmiermittel (15) enthält.

2. Vorrichtung nach Anspruch 1, **dadurch gekennzeichnet, dass** das Schmiermittel thixotrop ist.

3. Vorrichtung nach Anspruch 1 oder 2, **dadurch gekennzeichnet, dass** das Schmiermittel in einem weichen und porösen Material enthalten ist.

4. Vorrichtung nach Anspruch 1, 2 oder 3, **dadurch gekennzeichnet, dass** der Schmiermittelvorrat (15) in einem Vorratsbehälterteil (16) untergebracht ist, der im Gehäuseabschnitt um einen Teil des Federabschnitts (9) der Bürste herum ausgebildet ist.

5. Vorrichtung nach einem der vorangehenden Ansprüche, **dadurch gekennzeichnet, dass** der Federabschnitt (9) der Bürste die Gestalt eines elastischen Armes hat, der sich zwischen einem Befestigungsabschnitt (10) und dem Kontaktabschnitt (7) in der Nähe eines freien Endes (13) der Bürste erstreckt.

6. Vorrichtung nach dem vorangehenden Anspruch, **dadurch gekennzeichnet, dass** der Federabschnitt (9) eine Vielzahl von nebeneinander angeordneten Lamellen (17) umfasst.

7. Vorrichtung nach dem vorangehenden Anspruch, **dadurch gekennzeichnet, dass** die Lamellen verschiedene Längen besitzen.

8. Vorrichtung nach einem der vorangehenden Ansprüche, **dadurch gekennzeichnet, dass** die Bürste (3) allgemein die Gestalt eines V besitzt, wobei ein Ende frei ist (13) und das andere Ende mit einem elektrischen Verbindungsstück (5) verbunden ist, das dafür bestimmt ist, mit Versorgungsleitern verbunden zu werden.

9. Vorrichtung nach einem der vorangehenden Ansprüche, **dadurch gekennzeichnet, dass** der Gehäuseteil (2) ein Deckel eines Elektromotors ist und einen Durchlass (6) für eine Achse des Rotors des Motors umfasst, wobei der Kontaktabschnitt (7) jeder Bürste durch den Durchlass (6) hindurchgeht.

## Claims

1. Commutator device (1) for an electric motor comprising a housing part (2) and commutator brushes (3) housed in said housing part, each brush comprising a contact part (7) having a contact surface (8) adapted to be pressed against a commutator part of a rotor of the electric motor, and a spring part (9) attached to the contact part (7) so as to exert a force on said contact part in the direction of the rotor's commutator part, **characterised in that** the device comprises a damping element (14) arranged so as to absorb the vibrations or movements of the contact part (7) of the brush, the damping element comprising a supply of lubricant (15).

2. Device according to claim 1, **characterised in that** the lubricant is thixotropic.

3. Device according to claim 1 or 2, **characterised in that** the lubricant is contained in a soft and porous material.

4. Device according to claim 1, 2 or 3, **characterised in that** the lubricant supply (15) is arranged in a reservoir part (16) formed in the housing part around a portion of the spring part (9) of the brush.

5. Device according to any one of the preceding claims, **characterised in that** the spring part (9) of the brush is in the form of as an elastic arm extending between a mounting part (10) and the contact part (7) that is arranged close to a free end (13) of the brush.

6. Device according to the preceding claim, **characterised in that** the spring part (9) comprises a multitude of juxtaposed blades (17).

7. Device according to the preceding claim, **characterised in that** the blades have different lengths.

8. Device according to any one of the preceding claims, **characterised in that** the brush (3) is generally V-shaped, with one end being free (13) and the other end being connected to an electrical connecting part (5) adapted to be connected with supply leads.

9. Device according to any one of the preceding claims, **characterised in that** the housing part (2) is a cover of an electric motor and comprises a passage (6) for an axle of a rotor of the motor, the contact part (7) of each brush extending across the passage (6).
